# DEMANDE DE BREVET EUROPEEN

(11) **EP 4 570 336 A1**
(43) Date de publication de la demande: **18.06.2025**
(21) Numéro de dépôt: 24210635.9
(22) Date de dépôt: 04.11.2024
(51) Int. Cl.: A63F 13/22, A63F 13/98

(54) **GUIDE D'ALIGNEMENT ENTRE DEUX CONTRÔLEURS DE SYSTÈMES DE RÉALITÉ IMMERSIVE**

(30) Priorité: 28.11.2023 FR 2313187
(71) Demandeur: Orange, 92130 Issy-les-Moulineaux (FR)
(72) Inventeur: JOUIN, Maxime, 92326 CHATILLON CEDEX (FR); LACOCHE, Jérémy, 92326 CHATILLON CEDEX (FR); LEDUNOIS, Valérie, 92326 CHATILLON CEDEX (FR)
(74) Mandataire: Plasseraud IP

(57) **Abrégé**

La description concerne un guide physique (GUI1) d'alignement d'un premier contrôleur (CTL1) d'un premier système de réalité immersive, avec un deuxième contrôleur (CTL2) d'un deuxième système de réalité immersive, éventuellement par coopération avec un deuxième guide (GUI2) d'alignement de ce deuxième contrôleur (CTL2). Une telle réalisation permet de déterminer un repère commun entre un espace virtuel du premier système et un espace virtuel du deuxième système.

## Description

### Domaine technique

La présente divulgation relève du domaine des traitements de données en réalité immersive (virtuelle ou augmentée).

### Technique antérieure

Lorsque plusieurs utilisateurs utilisent en même temps dans le même espace réel des dispositifs individuels de réalité immersive (terme générique pour la réalité étendue RX, la réalité augmentée RA, la réalité virtuelle RV, la réalité mixte RM, etc.), tels que des casques de réalité immersive, les différents utilisateurs peuvent percevoir un objet virtuel (sonore, visuel, etc.) en des positions distinctes de l'espace réel partagé car les dispositifs de réalité immersive ne sont pas synchronisés spatialement (calibrés).

En effet, chaque utilisateur est localisé dans son propre espace grâce au casque qu'il utilise (par exemple selon une technique dite de « tracking inside out »).

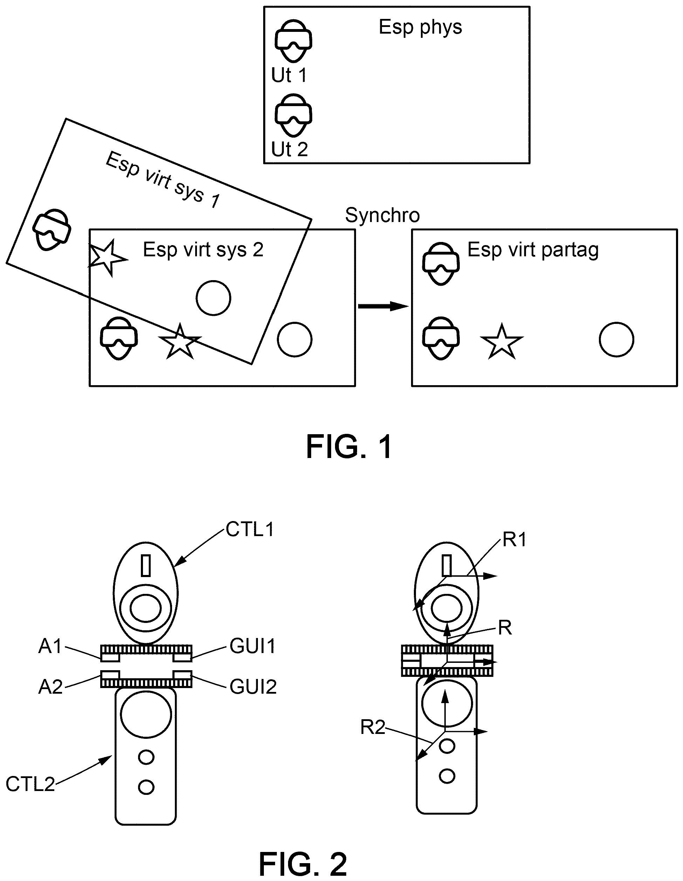

Lorsque plusieurs utilisateurs partagent le même espace physique et virtuel, afin de vivre la même expérience, il convient alors de synchroniser (calibrer) ces espaces pour que chaque utilisateur utilise un même système de coordonnées spatiales. Sans une telle synchronisation, les utilisateurs ne perçoivent pas les éléments virtuels au même endroit de l'espace, par exemple. Une telle situation est illustrée sur la gauche de la figure 1.

Dans l'état de l'art il existe plusieurs solutions pour pallier ce problème.

Une première solution propose que les casques utilisés s'appuient sur un algorithme dit « SLAM » : il est possible de partager une cartographie (par exemple un nuage de points) entre les différents équipements et, de là, un même système de coordonnées par recalage. En pratique, les constructeurs ne permettent pas toujours ce partage de cartographie et cette méthode SLAM ne fonctionne pas pour synchroniser des casques de constructeurs différents, typiquement.

Une deuxième solution propose des casques équipés de caméras pour se calibrer par rapport à un élément identifié dans l'environnement réel : par exemple un QRcode. La pose (position/rotation) du QRcode étant ensuite connue dans l'espace de chaque casque, il est possible d'aligner tous les espaces. En pratique tous les constructeurs ne donnent pas accès aux caméras du casque pour réaliser cette détection. Cette deuxième méthode impose aussi aux utilisateurs de positionner cet élément dans leur espace.

Une troisième méthode, classiquement utilisée, peut s'appuyer sur des manettes de contrôle de ces dispositifs. Chaque utilisateur positionne successivement sa manette (repérée dans l'espace 3D) à une position de la pièce (par exemple sur un socle) et appuie sur un bouton. Le système de réalité immersive connait ainsi la position de ce socle dans le repère de chaque casque et peut donc effectuer un alignement des espaces. Cette troisième méthode est relativement lente, difficile à utiliser pour des manettes de différents constructeurs et peut manquer de précision si la manette n'est pas bien positionnée sur son socle.

Ainsi, selon la troisième solution en particulier, lorsque les dispositifs individuels de réalité immersive sont dotés de manettes d'interaction, il est proposé de détecter la position d'une manette de chaque utilisateur dans l'espace réel partagé posée à une position prédéterminée de l'espace réel partagé (par exemple sur un socle propre à chaque manette). Un inconvénient de cette solution réside notamment dans le manque de précision de l'alignement des espaces virtuels de chaque utilisateur de l'espace réel partagé, pour des dispositifs de réalité immersive et notamment de manettes de constructeurs distincts. En effet, deux manettes de constructeurs distincts sont difficilement positionnables à une position précise de l'espace réel partagé.

### Résumé

La présente divulgation vient améliorer la situation.

Elle propose à cet effet une calibration des espaces d'utilisateurs en immersion grâce à un alignement des contrôleurs (ou « manettes » précitées).

Elle vise plus particulièrement un guide physique d'alignement d'un premier contrôleur d'un premier système de réalité immersive, avec un deuxième contrôleur d'un deuxième système de réalité immersive, pour déterminer un repère commun entre un espace virtuel du premier système et un espace virtuel du deuxième système.

Les premier et deuxième systèmes précités de réalité immersive peuvent comprendre respectivement les premier et deuxième contrôleurs, et typiquement aussi un casque de réalité immersive, chacun, comme indiqué plus haut.

Ainsi, grâce à ce guide physique, il est possible d'aligner les réglages des deux systèmes de réalité immersive et de partager un même repère dans un espace virtuel.

Dans une réalisation, le guide peut être configuré :
- pour être accolé à l'un des premier et deuxième contrôleurs, et
- pour être dans une position prédéterminée relativement à un autre guide physique auquel est accolé l'autre des premier et deuxième contrôleurs, pour un alignement des premier et deuxième contrôleurs.

Ainsi, dans ce cas, il est possible de prévoir un guide propre à chaque contrôleur, et d'aligner alors les deux guides pour partager un repère commun.

Dans une réalisation, l'accolement du guide audit « un des premier et deuxième contrôleurs » peut être réalisé par solidarisation mécanique.

Par exemple, le guide peut être intégré à un carter de protection logeant en position fixe ledit « un des premier et deuxième contrôleurs ».

En particulier, on peut prévoir que chaque guide physique comporte au moins un contact d'alignement apte à coopérer avec le contact d'alignement de l'autre guide physique.

Un tel contact d'alignement peut être une bande velcro par exemple, ou une paire d'aimants ou des encoches de formes coopératives.

Ces contacts d'alignement des guides peuvent comporter typiquement un dispositif de fixation ponctuelle entre les deux guides avec détrompage des positions relatives des deux guides.

En effet, la fixation peut avoir lieu ponctuellement pendant la calibration de l'espace virtuelle partagé (pour une synchronisation spatiale des espaces virtuels individuels des deux dispositifs de réalité immersive).

Par ailleurs, on entend par « détrompage » l'action d'utiliser un ou plusieurs dispositifs physiques, notamment mécaniques, pour éviter une erreur, notamment une erreur d'assemblage, de montage, de branchement, ou autres. Une telle réalisation permet alors d'assurer un bon positionnement en "translation" mais aussi en rotation d'un guide par rapport à l'autre.

Par exemple, chaque guide peut comporter deux contacts d'alignement aptes à coopérer avec deux contacts d'alignement de l'autre guide physique, et par exemple ces deux contacts d'alignement peuvent comporter deux aimants de polarités respectives inversées.

Dans une réalisation, le guide peut comporter en outre un transmetteur de signal d'alignement entre les premier et deuxième contrôleurs, ce transmetteur étant :
- actif lorsque les premier et deuxième contrôleurs sont alignés, pour déclencher une calibration des espaces virtuels des premier et deuxième systèmes de réalité immersive, et déterminer ainsi le repère commun précité,
- et inactif sinon.

Dans une réalisation, les contacts d'alignement respectifs des premier et deuxième contrôleurs sont conducteurs et aptes à transmettre, par conduction électrique, ce signal d'alignement entre les premier et deuxième contrôleurs lorsque les premier et deuxième contrôleurs sont alignés, la réception de ce signal d'alignement par l'un des premier et deuxième contrôleurs pouvant déclencher la calibration précitée des espaces virtuels.

Typiquement, ce signal peut être électrique, capacitif ou autre.

Alternativement, ce signal peut être un signal optique et on peut prévoir que le transmetteur comporte un trou traversant configuré pour :
- laisser passer un rayon optique d'un contrôleur, émetteur, à l'autre contrôleur, récepteur, lorsque les premier et deuxième contrôleurs sont alignés, ou
- interrompre le rayon optique sinon,
la détection du rayon optique par un capteur du contrôleur récepteur déclenchant ladite calibration des espaces virtuels, lorsque les premier et deuxième contrôleurs sont alignés.

Selon un autre aspect, la présente description vise aussi un contrôleur d'un système de réalité immersive, comportant un guide physique d'alignement du contrôleur avec un autre contrôleur d'un autre système de réalité immersive, pour déterminer un repère commun entre des espaces virtuels respectifs de ces systèmes de réalité immersive.

Ce contrôleur peut typiquement être une manette d'interaction (éventuellement préexistante) d'un système de réalité immersive.

Dans une réalisation de ce contrôleur, le guide physique peut être configuré pour être placé dans une position prédéterminée relativement à un autre guide physique d'un autre contrôleur.

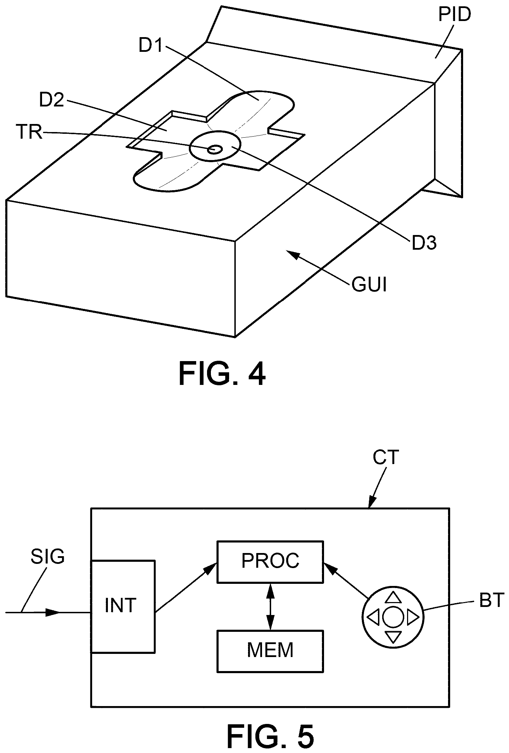

Il peut être prévu en outre une interface d'entrée activable par un utilisateur pour, lorsque les deux contrôleurs sont alignés, déclencher une calibration des espaces virtuels des premier et deuxième systèmes de réalité immersive, et déterminer le repère commun précité. Cette interface d'entrée peut être par exemple un bouton sur lequel un utilisateur appuie lorsque les deux guides (ou les deux contrôleurs) ont été placés dans des positions d'alignement respectives (ou respectivement par rapport à un même guide, comme décrit plus loin en référence à la figure 4).

Selon un autre aspect, la présente description vise aussi un procédé de calibration d'un premier système de réalité immersive avec un deuxième système de réalité immersive, le premier système comprenant un premier contrôleur et un guide physique d'alignement du premier contrôleur avec un deuxième contrôleur que comprend le deuxième système de réalité immersive, le procédé comportant :
- sur détection par le premier contrôleur d'un signal d'alignement avec le deuxième contrôleur, déterminer un repère commun entre un espace virtuel du premier système et un espace virtuel du deuxième système, et
- obtenir au moins une matrice de transformation de coordonnées du premier espace virtuel dans ledit repère commun.

Cette matrice de transformation de coordonnées permet de passer d'un espace virtuel propre à un système donné, à un espace partagé avec l'autre système et ayant typiquement un même repère commun.

On prévoit en effet d'obtenir « au moins une » matrice de transformation, car chaque contrôleur peut avoir sa propre matrice de transformation de son propre espace vers l'espace partagé. Alternativement, on peut prévoir une seule matrice de transformation (pour une adaptation d'un système à l'espace de l'autre système).

Selon un autre aspect, il est proposé un programme informatique comportant des instructions pour la mise en oeuvre de tout ou partie d'un procédé tel que défini dans les présentes lorsque ce programme est exécuté par un processeur. Selon un autre aspect, il est proposé un support d'enregistrement non transitoire, lisible par un ordinateur, sur lequel est enregistré un tel programme.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] illustre une calibration entre deux systèmes de réalité immersive.
Fig. 2
   [Fig. 2] illustre un mode de réalisation possible utilisant deux guides respectifs de contrôleurs de systèmes de réalité immersive, pour un alignement des deux contrôleurs.
Fig. 3

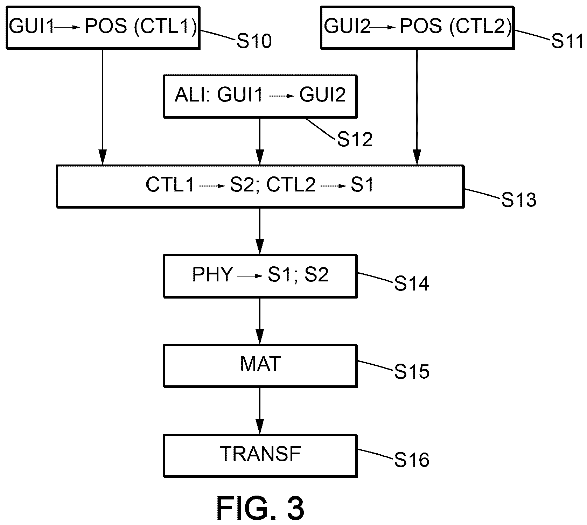

   [Fig. 3] montre un exemple d'une succession d'étapes d'un procédé mis en oeuvre par les contrôleurs de la figure 2.
Fig. 4
   [Fig. 4] illustre un exemple d'un guide d'alignement entre deux contrôleurs de systèmes respectifs de réalité immersive.
Fig. 5
   [Fig. 5] illustre schématiquement le circuit de traitement d'un contrôleur de système de réalité immersive.

### Description des modes de réalisation

Pour résoudre le problème de précision de positionnement dans l'espace réel, il est proposé de doter les manettes de guide physique d'alignement. Chaque guide physique d'alignement est apte à être placé dans une position prédéterminée relative à un autre guide physique d'alignement. Le repère d'alignement de l'espace virtuel partagé par les deux dispositifs individuels de réalité immersive dont les manettes sont alignées est alors placé entre les deux guides physiques d'alignement.

Ainsi, il est proposé de s'appuyer sur les manettes (ou « contrôleurs ») des utilisateurs qui sont localisées dans l'espace 3D (en position et rotation) de chaque utilisateur, et en particulier de les équiper d'un guide physique d'alignement entre les deux manettes. Le guide physique peut être intégré mécaniquement à la manette, ou encore à un carter (tel qu'une enveloppe de protection contre les chocs de la manette par exemple). Alternativement encore, le guide physique peut comporter des repères de positionnement de sa manette, ce qui permet à un utilisateur de disposer la manette en un point précis du guide, par exemple à l'aide de repères visuels ou en positionnant la manette contre une encoche mécanique spécifique au modèle de manette.

Plus particulièrement, chaque utilisateur synchronise successivement son espace avec l'espace de l'autre utilisateur en rapprochant son contrôleur de celui de l'autre utilisateur et en les alignant par la coopération mécanique entre les deux guides respectifs des manettes. Cet alignement est effectué à l'aide d'un guide physique positionné sur le contrôleur comme présenté sur la figure 2. L'alignement des deux contrôleurs peut être facilité par la présence d'aimants qui peut garantir ainsi que les deux contrôleurs sont correctement positionnés l'un par rapport à l'autre. Alternativement, les aimants peuvent être remplacés par des couples de protubérance/logement homologue disposés respectivement sur les guides pour assurer un détrompage par coopération mécanique, ou encore par tout autre solidarisation mécanique temporaire comme une bande velcro^{®}, ou autre.

En référence à la partie de gauche de la figure 2, un premier contrôleur CTL1 d'un premier système de réalité immersive (connecté à un casque de ce système typiquement) est accolé à un premier guide d'alignement GUI1, par exemple en étant solidarisé mécaniquement au premier contrôleur CTL1. De façon homologue, un deuxième contrôleur CTL2 d'un deuxième système est accolé ici à un deuxième guide d'alignement GUI2. Chaque guide GUI1 comporte au moins un contact d'alignement A1 avec un contact d'alignement A2 de l'autre guide GUI2. Sur la figure 2, deux contacts d'alignement sont représentés pour chaque guide, par exemple une paire d'aimants de polarités inversées, ce qui permet à la fois :
- de positionner précisément le premier guide GUI1 contre le deuxième guide GUI2, et
- de détromper ce positionnement pour un utilisateur manipulant les deux contrôleurs CTL1 et CTL2 et leurs guides respectifs GUI1 et GUI2.

En référence maintenant à la partie de droite de la figure 2, le premier contrôleur CTL1 peut déterminer précisément la position du premier guide GUI1 dans un premier repère R1 de son espace virtuel, et le deuxième contrôleur CTL2 peut déterminer précisément la position du deuxième guide GUI2 dans un deuxième repère R2 de son espace virtuel. Lorsque les deux guides GUI1 et GUI2 sont parfaitement alignés (par exemple par détection d'un signal (électrique ou optique comme décrit ci-après) d'alignement entre les deux guides), il est alors possible de déterminer un repère R, commun aux deux espaces virtuels des premier et deuxième systèmes de réalité immersive.

Pour valider l'alignement, il est possible de demander en outre aux utilisateurs d'appuyer sur un bouton du contrôleur. Il est également possible de détecter le contact automatiquement à l'aide d'un capteur (optique, électrique ou de pression) placé sur le guide, générant la communication d'un signal de validation d'alignement entre les deux manettes. Par exemple, la circulation d'un courant électrique très faible entre les deux contrôleurs via les aimants conducteurs A1-A2, peut être détectée par chaque contrôleur au moment du contact via les aimants et lorsque les deux guides sont alignés. Par exemple en variante, l'une des manettes CTL1 peut générer ce courant et l'autre manette CTL2 peut le recevoir via les aimants A1-A2 et détecter ce faible courant électrique. Par exemple, il peut s'agir de détecter un contact « capacitif » entre les aimants A1-A2 (très faible courant détecté).

Alternativement, une fenêtre d'émission optique d'un rayon lumineux sur une manette peut être alignée avec une fenêtre logeant un capteur optique sur l'autre manette, pour détecter le rayon et déterminer ainsi que l'alignement est réalisé.

La position du guide physique peut être déterminée préalablement dans le repère de coordonnées du contrôleur sur lequel il est positionné. Cette étape met en oeuvre une calibration manuelle par modèle de casque. Elle peut être réalisée une fois pour toute lorsque le guide est solidarisé définitivement à la manette (en usine ou par un utilisateur qui enveloppe la manette d'un carter de protection). Il est possible d'adapter le guide à des contrôleurs de différents constructeurs afin de rendre la calibration connue entre différents équipements.

Dans une variante de réalisation de la figure 2, illustrée sur la figure 4, un unique guide GUI peut être utilisé pour aligner les contrôleurs respectifs de deux systèmes distincts. Dans l'exemple illustré, deux faces opposées du guide GUI peuvent comporter des dépressions de surface D1, D2, D3 (par usinage ou embossage de surfaces métalliques par exemple). Ces dépressions épousent la forme de différents modèles de manettes (par exemple ici trois modèles de manettes différents, ou tout au moins trois formes de modèles de manettes différentes). Ainsi, des extrémités de manettes de formes différentes peuvent être positionnées en chacune des surfaces opposées du guide, lequel guide peut comporter un pied PID à poser sur une surface horizontale pour stabiliser mécaniquement le positionnement d'une manette par rapport à l'autre. Le guide comporte alors un trou traversant TR pour laisser par exemple se propager optiquement un rayon lumineux d'une extrémité de manette à l'extrémité de l'autre manette, lorsque les deux manettes sont accolées de part et d'autre du guide.

La mise à jourdu système de coordonnées peut alors être effectuée comme suit, en référence à la figure 3.

On connait au préalable :
- Les positions des guides physiques dans les repères respectifs de chaque contrôleur aux étapes S10 et S11, et
- Les positions relatives entre les deux guides physiques lorsqu'ils sont alignés à l'étape S12.

Une fois l'alignement effectué, on peut connaitre en outre à l'étape S13 :
- La position du contrôleur du premier casque dans le repère du deuxième casque et
- La position du contrôleur du deuxième casque dans le repère du premier casque.

On en déduit :
- La position d'un même repère physique, commun dans l'espace de chaque utilisateur à l'étape S14, et
- Une matrice de transformation MAT entre la position du contrôleur CTL1 du premier casque et la position du contrôleur CTL2 du deuxième casque, à l'étape S15.

Cette matrice de transformation permet alors de transformer le système de coordonnées d'un des deux casques pour que les deux systèmes de coordonnées coïncident dans la suite de l'expérience immersive, pour toute étape suivante S16, comme visible à droite de la figure 1.

Alternativement à la détermination d'une seule matrice à l'étape S15, il peut être déterminé deux matrices aux étapes S13 et S14, chaque matrice étant propre à un repère commun dans les espaces de deux casques. Dans ce cas, chaque système de casque doit corriger ses coordonnées à l'aide de sa propre matrice, ce qui peut susciter des ressources pour les deux systèmes de casques (au lieu de ne solliciter de ressources que pour un seul système dans le mode de réalisation de la figure 3).

On a illustré sur la figure 5 un exemple de réalisation d'un contrôleur comportant un circuit de traitement CT comprenant :
- une mémoire MEM apte à stocker notamment des données d'instruction d'un programme informatique pour la mise en oeuvre d'un procédé au sens de la présente description (par exemple le procédé illustré sur la figure 3),
- une interface INT apte à recevoir le signal (SIG) précité, d'alignement des deux contrôleurs,
- un processeur PROC accédant à ladite interface INT et à ladite mémoire pour lire et exécuter les instructions du programme dès qu'un alignement est détecté avec un autre contrôleur par exemple,
- éventuellement un bouton BT à disposition d'un utilisateur pour amorcer le procédé d'alignement du contrôleur illustré avec un autre contrôleur.

Bien entendu, le circuit de traitement précité peut comporter en outre une interface de communication avec l'autre contrôleur par exemple pour recevoir sa position (étape S11 de la figure 3) afin notamment d'estimer la matrice de transformation précitée. A cet égard, le programme informatique précité peut comporter des instructions réparties entre les premier et deuxième contrôleurs précités pour pouvoir coopérer l'un avec l'autre.

### Application industrielle

L'objet de la présente description peut faciliter la création et le déploiement d'applications de réalité immersive (virtuelle et/ou augmentée) avec plusieurs utilisateurs partageant le même espace physique. Il est alors possible de faire coopérer des casques de différentes marques dans le même espace, d'effectuer rapidement une calibration des différents casques avant de lancer une application en temps réel, de corriger les dérives de tracking, etc., et ce en effectuant un simple geste pour les utilisateurs. Typiquement dans le domaine du divertissement, les salles d'arcades de réalité immersive (réalité virtuelle), qui proposent d'immerger plusieurs utilisateurs dans un même espace physique, peuvent accueillir des utilisateurs équipés de leur propre casque, quand bien même ces casques seraient fabriqués par des constructeurs différents.

En réalité augmentée, certains casques (Magic Leap^{®} par exemple) peuvent se repérer dans le repère d'un bâtiment à l'aide de leurs caméras, mais tel n'est pas le cas d'un casque comme Quest Pro^{®} car les caméras ne sont pas accessibles aux développeurs. Grâce à cette réalisation, en rapprochant les contrôleurs des deux périphériques, le Quest Pro^{®} peut être localisé dans le même espace du bâtiment que le Magic Leap^{®}. Les cas d'applications sont multiples (en maison connectée (ou « Smart Home »), en Industrie 4.0 ou encore en ville intelligente (ou « Smart City »)).

La présente divulgation ne se limite pas aux exemples de réalisation présentés ci-avant, mais elle englobe d'autres variantes. Par exemple, il a été illustré dans le mode de réalisation de la figure 3 un exemple dans lequel deux manettes se synchronisent entre elles. Bien entendu, plus d'une manette peuvent être synchronisées avec une manette « maître », les étapes de la figure 3 étant répétées pour chaque manette « esclave » devant se synchroniser avec une manette « maître » (qui peut être esclave d'une autre manette maître). Chaque système d'une manette « esclave » a alors sa propre matrice de transformation pour partager un repère commun à tous les espaces des systèmes de casque.

## Revendications

1. Guide physique (GUI ; GUI1, GUI2) d'alignement d'un premier contrôleur (CTL1) d'un premier système de réalité immersive, avec un deuxième contrôleur (CTL2) d'un deuxième système de réalité immersive, pour déterminer un repère commun entre un espace virtuel du premier système et un espace virtuel du deuxième système.

2. Guide (GUI1) selon la revendication 1, configuré :
- pour être accolé à l'un des premier et deuxième contrôleurs (CTL1), et
- pour être dans une position prédéterminée relativement à un autre guide physique (GUI2) auquel est accolé l'autre des premier et deuxième contrôleurs (CTL2), pour un alignement des premier et deuxième contrôleurs.

3. Guide selon la revendication 2, dans lequel l'accolement du guide (GUI1) audit un des premier et deuxième contrôleurs (CTL1) est réalisé par solidarisation mécanique.

4. Guide selon la revendication 3, dans lequel le guide (GUI1) est intégré à un carter de protection logeant en position fixe ledit un des premier et deuxième contrôleurs (CTL1).

5. Guide (GUI1) selon l'une des revendications 2 à 4, comportant au moins un contact d'alignement (A1) apte à coopérer avec un contact d'alignement (A2) de l'autre guide physique (GUI2).

6. Guide selon la revendication 5, dans lequel les contacts d'alignement des guides comportent un dispositif de fixation ponctuelle entre les deux guides avec détrompage des positions relatives des deux guides.

7. Guide selon l'une des revendications 5 et 6, comportant deux contacts d'alignement (A1) aptes à coopérer avec deux contacts d'alignement (A2) de l'autre guide physique (GUI2), et dans lequel les deux contacts d'alignement comportent deux aimants de polarités respectives inversées.

8. Guide selon l'une des revendications précédentes, comportant en outre un transmetteur (TR) de signal d'alignement entre les premier et deuxième contrôleurs, ledit transmetteur étant :
- actif lorsque les premier et deuxième contrôleurs sont alignés (S12), pour déclencher une calibration des espaces virtuels des premier et deuxième systèmes de réalité immersive (S13), et déterminer ledit repère commun (S14),
- et inactif sinon.

9. Guide selon la revendication 8 prise en combinaison avec la revendication 5, dans lequel les contacts d'alignement (A1, A2) respectifs des premier et deuxième contrôleurs sont conducteurs et aptes à transmettre, par conduction électrique, ledit signal d'alignement entre les premier et deuxième contrôleurs lorsque les premier et deuxième contrôleurs sont alignés, la réception dudit signal d'alignement par l'un des premier et deuxième contrôleurs déclenchant ladite calibration des espaces virtuels.

10. Guide selon la revendication 8, dans lequel le transmetteur comporte un trou traversant (TR) configuré pour :
- laisser passer un rayon optique d'un contrôleur, émetteur, à l'autre contrôleur, récepteur, lorsque les premier et deuxième contrôleurs sont alignés, ou
- interrompre le rayon optique sinon,
la détection du rayon optique par un capteur du contrôleur récepteur déclenchant ladite calibration des espaces virtuels, lorsque les premier et deuxième contrôleurs sont alignés.

11. Contrôleur d'un système de réalité immersive, comportant un guide physique (GUI1 ; GUI2) d'alignement du contrôleur (CTL1) avec un autre contrôleur (CTL2) d'un autre système de réalité immersive, pour déterminer un repère commun entre des espaces virtuels respectifs desdits systèmes de réalité immersive.

12. Contrôleur selon la revendication 11, dans lequel le guide physique (GUI1) est apte à être placé dans une position prédéterminée relative à un autre guide physique d'un autre contrôleur.

13. Contrôleur selon l'une des revendications 11 et 12, comportant en outre une interface d'entrée activable par un utilisateur pour, lorsque les deux contrôleurs sont alignés, déclencher une calibration des espaces virtuels des premier et deuxième systèmes de réalité immersive (S13), et déterminer ledit repère commun (S14).

14. Procédé de calibration d'un premier système de réalité immersive avec un deuxième système de réalité immersive, le premier système comprenant un premier contrôleur et un guide physique (GUI ; GUI1, GUI2) d'alignement du premier contrôleur (CTL1) avec un deuxième contrôleur (CTL2) que comprend le deuxième système de réalité immersive, le procédé comportant :
- sur détection par le premier contrôleur d'un signal d'alignement avec le deuxième contrôleur (S12), déterminer un repère commun (S14) entre un espace virtuel du premier système et un espace virtuel du deuxième système, et
- obtenir au moins une matrice de transformation (S15) de coordonnées du premier espace virtuel dans ledit repère commun.

15. Programme informatique comportant des instructions pour la mise en oeuvre du procédé selon la revendication 14, lorsque ce programme est exécuté par un processeur.
